# EUROPEAN PATENT APPLICATION

(11) **EP 1 698 980 A1**
(43) Date of publication of application: **06.09.2006**
(21) Application number: 05425123.6
(22) Date of filing: 04.03.2005
(51) Int. Cl.: G06F 15/16, H04L 12/40

(54) **A method for managing data exchange in the avionic system of an aircraft**

(71) Applicant: Galileo Avionica S.p.A., 50013 Campi Bisenzio (Firenze) (IT)
(72) Inventor: Rinaldi, Pier Paolo, 10099 San Mauro Torinese (IT)
(74) Representative: Jorio, Paolo

(57) **Abstract**

Disclosed herein is an aircraft (2) equipped with an avionic system (1) comprising a plurality of on-board apparatuses (3), and a mission core system (4) including a plurality of interface devices (7), via which a user can interact with the on-board apparatuses (3), and a mission computer (5), which is connected to the on-board apparatuses (3) and to the interface devices (7) and on which there is installed a software (22) designed for implementing modules (35) for managing on-board apparatuses (3) and modules (29) for managing interface devices (7), and further designed for managing data exchange between the modules (35, 29) for managing on-board apparatuses (3) and interface devices (7), in which the modules (29) for managing interface devices (7) acquire the selections (31) made by a user via the interface devices (7), the selections (31) are then converted (202) into commands (33) for the on-board apparatuses (3), and the commands (33) thus generated are then stored (203) in a shared data base (25), in such a way as to be usable by the modules (35) for managing on-board apparatuses (3) and implemented thereon.

## Description

The present invention relates in general to the management of data exchange in the avionic system of an aircraft, and more in particular to a method for managing the use of data between software modules that produce data and software modules that consume data in the avionic system of an aircraft.

As is known, modern aircraft are equipped with an avionic system comprising a plurality of on-board apparatuses, and a mission core system, which comprises a plurality of interface devices via which a user, for example the pilot of the aircraft, can interact with the on-board apparatuses, for example for making selections and imparting commands, and a mission computer connected to the on-board apparatuses and to the interface devices via a communication bus.

The on-board apparatuses and the interface devices exchange data through an operational flight program loaded into the mission computer, said program setting up a direct relation of use between a manager associated to an interface device and a manager associated to a corresponding on-board apparatus.

One of the main problems inherent in this kind of mechanism of data exchange between the interface devices and the on-board apparatuses lies in the management of concurrent and conflicting access to data of one and the same on-board apparatus by different interface-device managers, this problem currently being solved using techniques of a semaphore type, through which access to the data of one and the same on-board apparatus is enabled to more than one interface device on the basis of pre-set priorities.

The main drawback inherent in the use of direct relations of use between interface-device managers and on-board apparatus managers lies in the fact that, in the case of addition of a new on-board apparatus or of a new interface device, it is necessary to intervene both on the relations of use that involve said on-board apparatus or said interface device and on the management of the concurrent accesses to the data, thus rendering the operational flight program far from flexible in regard to the introduction of new on-board apparatuses and of new interface devices, or else in regard to the modernization of the on-board equipment of the aircraft that involves replacement of models of on-board apparatuses and interface devices with new ones.

The purpose of the present invention is to provide a method for managing data exchange in the avionic system of an aircraft, a computer-program product and a mission core system of the avionic system of an aircraft implementing said method, and an aircraft equipped with said mission core system, which will enable the drawbacks described above to be overcome.

According to the present invention there are provided a method for managing the use of a datum generated by a module for producing data on the part of a module that consumes data in the avionic system of an aircraft, as defined in Claim 1, a computer-program product, as defined in Claim 11, a mission core system, as defined in Claim 12, and an aircraft, as defined in Claim 13.

The present invention will now be described with reference to the annexed plate of drawings, which illustrates a nonlimiting example of embodiment thereof, and in which:
- Figure 1 illustrates a block diagram of the avionic system of an aircraft;
- Figure 2 illustrates the architecture of a mission computer forming part of the avionic system of Figure 1; and
- Figure 3 illustrates the module-based architecture of a software that runs on the mission computer illustrated in Figure 2 and implementing the management method according to the invention.

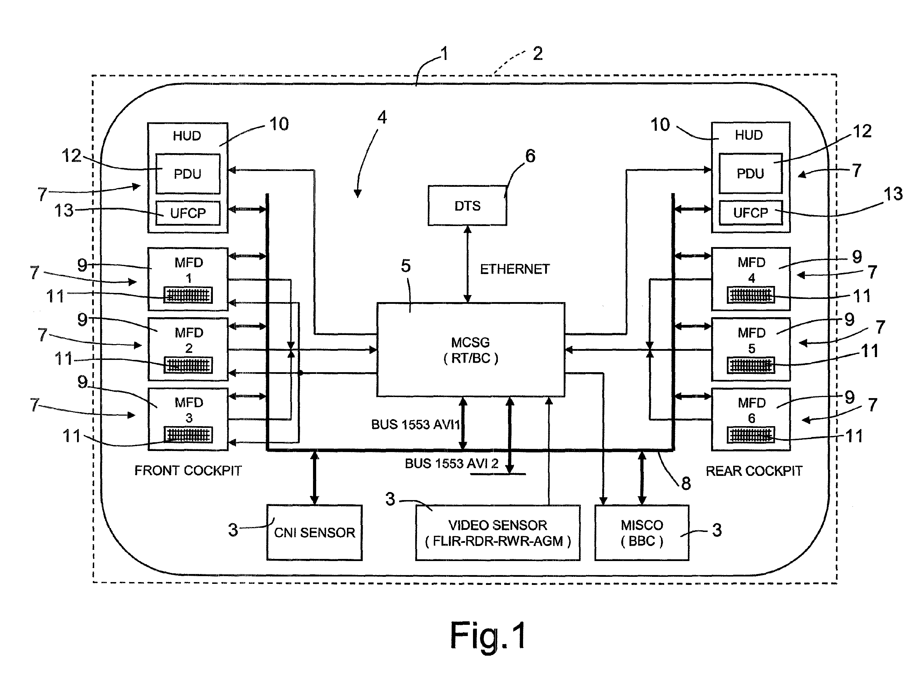

Illustrated schematically in Figure 1, and designated as a whole by 1, is the avionic system of an aircraft 2 (represented schematically by a dashed line), for example an advanced training aircraft.

The avionic system 1 comprises a plurality of on-board apparatuses 3, such as, for example, communication navigation identification sensors (CNIs), video sensors (forward-looking infrared (FLIR), radar (RDR), radar warning receiver (RWR), etc.), weapon systems (air-to-ground missiles (AGM), etc.), interface and reversionary computing unit (MIScellanea Computer - MISCO), etc., and a mission core system 4 comprising a mission computer (MCSG) 5, a data-transfer system (DTS) 6, connected to the mission computer 5 via an Ethernet cable for transferring mission data bases and recording flight data, and a plurality of interface devices 7 connected to the mission computer 5 and to the on-board apparatuses 3 via an external bus 8 of the MIL-STD-1553B type for enabling a user, for example the pilot, to interact with the on-board apparatuses 3.

The interface devices 7 comprise a plurality of smart colour multifunction displays (SMFDs) 9 and head-up display units (HUDs) 10.

In particular, in advanced training aircraft, the smart colour multifunction displays 9 are preferably six in number, three for the front cockpit and three for the rear cockpit, are of the active-matrix liquid-crystal display (AMLCD) type, are provided with a keypad 11 for entry of data or for making selections, and have a 5" x 5" display area.

The head-up display units 10 can be two in number, one for the front cockpit and one for the rear cockpit, and each comprise a pilot display unit (PDU) 12 and a up-front control panel (UFCP) 13.

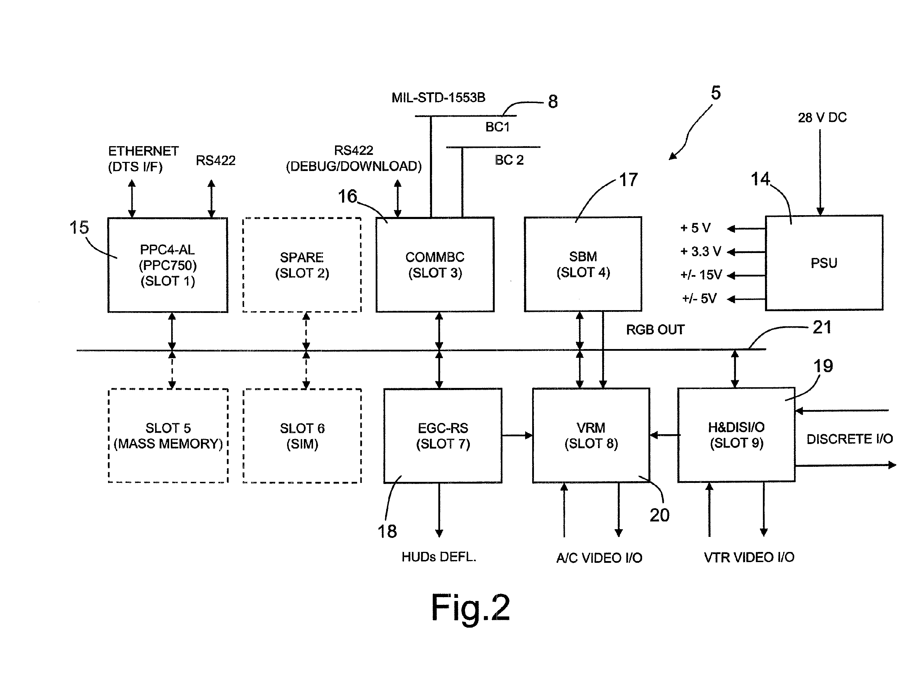

Figure 2 illustrates the architecture of the mission computer 5, which comprises a power-supply unit (PSU) 14, a processing unit (PPC4-AL) 15 based upon a Motorola Power PC750 microprocessor, a communications unit (COMMBC) 16, which interfaces with the external bus 8, a digital map-generation unit (SBM) 17, a graphic-control unit 18 of the raster-stroke type (EGC-RS), designed to generate graphic symbols for the head-up display units 10, a HOTAS (Hands On Throttle And Stick) interface unit 19, a video-selection unit (VRM) 20, which is designed to receive signals from the digital map-generation unit 17, from the graphic-control unit 18 and from the HOTAS interface unit 19, and an internal-communication bus 21 shared between all the units of the mission computer 5 for the exchange of data.

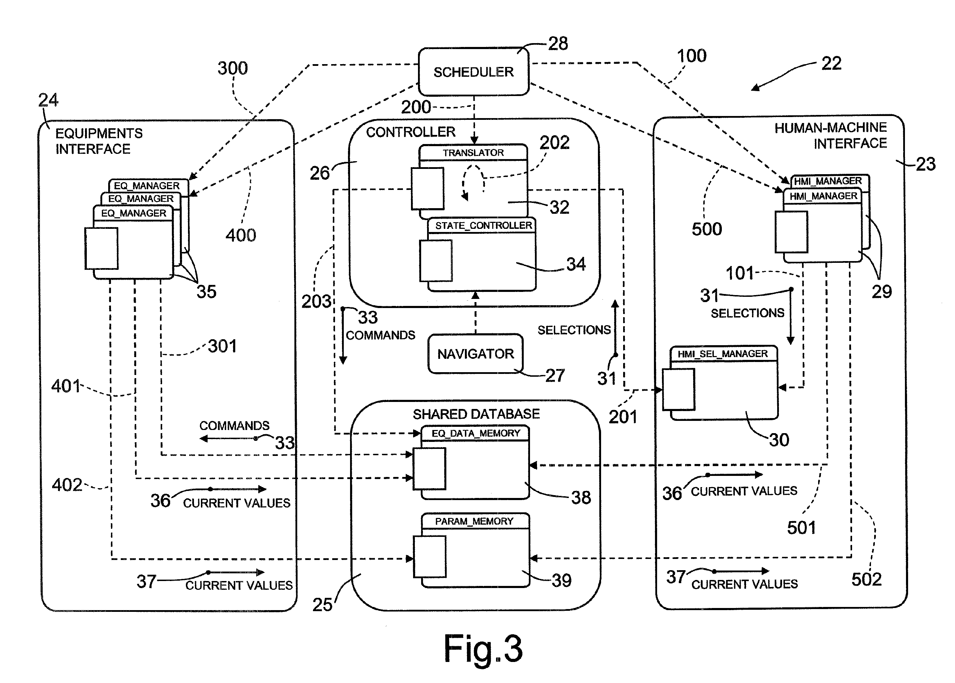

Loaded into the processing unit 15 is an operational flight program (OFP) 22, based upon a module-based architecture illustrated in Figure 3 and compiled in a programming language known as Ada 95, which is based upon the use of the "protected-type" construct that guarantees an atomic access to the data and intrinsically solves the problem of protection from concurrent accesses in reading and writing by parallel processes.

In particular, with reference to Figure 3, the operational flight program 22 can conceptually be divided into the following software objects:
- a software object, hereinafter referred to, for reasons of convenience, with the name of man-machine interface 23, designed for virtualization of the interface devices 7;
- a software object, hereinafter referred to with the name of apparatus interface 24, designed for virtualization of the on-board apparatuses 3;
- a software object, hereinafter referred to, for reasons of convenience, with the name of shared data base 25, designed for the storage of shared data between the man-machine interface 23 and the apparatus interface 24, such as primary-flight and aircraft parameters 2, operational states of the avionic system 1, and commands directed to the on-board apparatuses 3 and generated according to the selections made by the user;
- a software object, hereinafter referred to, for reasons of convenience, with the name of controller 26, designed for the management of data exchange between the man-machine interface 23 and the apparatus interface 24;
- a software object, hereinafter referred to, for reasons of convenience, with the name of navigator 27, designed for the execution of calculations and algorithms during the various steps of navigation, in a way in itself known and hence not described in detail; and
- a software object, hereinafter referred to, for reasons of convenience, with the name of scheduler 28, designed for scheduling the operations executed by the various software objects, according to a logic sequence described in what follows.

The man-machine interface 23 comprises a plurality of modules 29 for managing the interface devices 7, and a module 30 for managing the selections made by the user. Each management module 29 is associated to a respective interface device 7 and creates a communication between the interface device 7 itself and the shared data base 25.

In particular, each management module 29 is designed to: acquire a selection 31 made by the user via the keypad 11 of the corresponding interface device 7, the selection 31 of which can be constituted by a selection proper to a datum in a menu presented to the user or else by the entry of the datum itself; display on the corresponding interface device 7 graphic symbols representing the selection 31 made; and send the selection 31 made to the management module 30, which has the function of gathering all the selections 31 made by the user via the various interface devices 7 and of resolving possible concurrent accesses, conflicting or otherwise, to the on-board apparatuses 3.

The controller 26 comprises a translator module 32, designed to: acquire, via interrogation operations of a "select" type, the selections 31 gathered by the management module 30; convert said selections 31 into respective commands 33; and send the commands 33 to the shared data base 25 via operations of writing of a "set" type. The controller 26 further comprises a state-controller module 34, designed to manage the state transitions of the avionic system 1 according to the selections 31 gathered by the management module 30 and according to calculations made by the navigator 27.

The apparatus interface 24 comprises a plurality of modules 35 for managing the on-board apparatuses 3, each of which is associated to a respective on-board apparatus 3 and creates a communication between the on-board apparatus 3 itself and the shared data base 25. In particular, each management module 29 is designed to acquire, via interrogation operations of a "select" type, the commands 33 generated by the translator module 32 and directed to the respective on-board apparatus 3, and implement said commands 33 on the on-board apparatus 3 itself, appropriately handling any possible conflicts between the commands 33 and operational constraints of the on-board apparatus 3, modifying the execution of the commands 33 according to pre-defined criteria.

Said modifications are then transferred into the shared data base 25, overwriting, via operations of writing of a "set" type, any possible parameters involved in these modifications, such as for example current operational parameters 36 of the on-board apparatuses 3 and general parameters 37, such as flight and/or aircraft parameters 2, and/or operational states of the avionic system 1.

The shared data base 25 comprises a first module 38 for storing the current operational parameters 36 and the commands 33, and a second module 39 for storing the general parameters 37. The first storage module 38 and the second storage module 39 are interrogated by the management modules 29 for the purpose of acquiring the current operational parameters 36 and the general parameters 26 and displaying them on the interface devices 7.

In use, the scheduler 28 activates:
- the man-machine interface 23 for acquiring the selections 31 made by the user on the interface devices 7 (100);
- the controller 26 for acquiring the selections 31 from the man-machine interface 23 to convert them into respective commands 33 for the on-board apparatuses 3 and write the commands 33 in the shared data base 25 (200);
- the apparatus interface 24 for acquiring the commands 33 from the shared data base 25 to implement them on the on-board apparatuses 3 (300), and for writing, in the shared data base 25, the current operational parameters 36 and the general parameters 37, possibly modified following upon execution of the commands 33 (400); and finally
- the man-machine interface 23 for acquiring the current operational parameters 36 and the general parameters 37 from the shared data base 25 and displaying them on the interface devices 7 (500).

More in detail, when the pilot makes a selection 31 designed for a given on-board apparatus 3 via the keypad 11 of a corresponding interface device 7, the corresponding management module 29 produces a datum representing the selection 31 made, which is gathered (101) by the management module 30 to render the selection 31 usable by the translator module 32, which accesses (201) said selection 31 and converts it (202), through an appropriate validation depending upon the current operational state of the avionic system 1, into a corresponding command 33.

The command 33 thus generated is entered (203) into the first storage module 38 to make it usable by the module 35 for managing the on-board apparatus 3 to which the command 33 is destined. Next, the management module 35 accesses (301) the first storage module 38, takes up the command 33 and implements it on the corresponding on-board apparatus 3. In this a way, then, the module 35 for managing the on-board apparatus 3 "consumes" the datum initially "produced", in the form of selection 31, by the module 29 for managing the interface device 7.

At this point, the module 35 for managing the on-board apparatus 3 "produces" a current operational parameter 36 regarding the on-board apparatus 3, and, possibly, a general parameter 37, such as a flight and/or aircraft parameter 2, and/or an operational state of the avionic system 1.

The current operational parameters 36 and the general parameters 37 are then entered (401, 402), respectively, into the first storage module 38 and into the second storage module 39, so as to render said current operational parameters 36 and general parameters 37 usable by those modules 29 for managing the interface devices 7 that are involved in the use of the current operational parameters 36 and general parameters 37 themselves. Next, the management modules 29 access (501, 502), without the intermediation of the translator module 32, the current operational parameters 36 and the general parameters 37, and display them on the respective interface devices 7. In this way, the modules 29 for managing the interface devices 7 become "consumers" of the data "produced", in the form of current operational parameters 36 and of general parameters 37, by the module 35 for managing the on-board apparatus 3.

As may be noted, the logic sequence followed by the scheduler 28 conveys, by means of relations of use between the various modules, a datum between the man-machine interface 23 and the apparatus interface 24 along two distinct paths according to whether the datum produced is constituted by a selection 31, or else by a current operational parameter 36 or a general parameter 37.

From the above description, there is evident a function of decoupling performed by the management module 30, by the translator module 32, and by the shared data base 25. In particular, the shared data base 25 and the management module 30 function as passive objects in so far as they make available, by means of operations of "select" and "set", the selections 31 and the commands 33 to the translator module 32, which functions, instead, as active object. Hence, said decoupling enables avoidance of direct relations of use for the exchange of a datum, constituted by a selection 31, a command 33, a current operational parameter 36, or else a general parameter 37, between a module 29 for managing an interface device 7, which initially is one for producing data and then becomes a consumer of data, and a module 35 for managing an on-board apparatus 3, which initially is a consumer of data and then becomes one for producing data.

This leads to the evident advantage that the addition of an on-board apparatus 3 or of an interface device 7 simply requires the addition of a respective management module 35 or 29 and possibly updating of mapping between selections 31 and commands 33 in the translator module 32 in so far as the relations of use between the man-machine interface 23, the shared data base 25, and the controller 26 do not have to be modified.

Furthermore, the logic sequence followed by the scheduler 28 is shared in a finite number of concurrent processes with definite priorities and frequencies. In particular, the translator module 32 performs its tasks within a maximum-priority-and-frequency process, guaranteeing the correct logical sequence.

Finally, it should be noted that the construction of the operational flight program 22 in the programming language Ada 95 enables advantageous exploitation of the intrinsic characteristics of this programming language, i.e., atomic access to the data (selection 31, command 33, current operational parameter 36, or general parameter 37) and protection from concurrent accesses in reading and writing by parallel processes, for example by the modules 29, 32, 35, which, being created as "protected objects", reinforce decoupling between the man-machine interface 23 and the apparatus interface 24.

## Claims

1. A method for managing data exchange in the avionic system (1) of an aircraft (2), said avionic system (1) comprising at least one on-board apparatus (3), an interface device (7), and a mission computer (5), which is connected to said on-board apparatus (3) and to said interface device (7) and on which there is installed a software (22), designed for implementing a first management module (29) for managing said interface device (7) and a second management module (35) for managing said on-board apparatus (3), and for managing data exchange between said first module (29) and said second module (35) according to said method; said method comprising:
• acquiring, by said first management module (29), a selection (31) made via said interface device (7);
said method being **characterized in that** it further comprises:
• converting (202) said selection (31) into a command (33) for said on-board apparatus (3); and
• storing (203) said command (33) in a data base of shared data (25) in such a way as to render said command (33) usable by said second management module (35).

2. The method according to Claim 1, further comprising:
• accessing (301), by said second management module (35), said shared data base (25) for acquiring said command (33); and
• implementing said command (33) on said on-board apparatus (3).

3. The method according to Claim 1 or Claim 2, further comprising:
• gathering (101) a plurality of selections (31) made via said interface device (7);
• resolving possible conflicts between said selections (31); and
• accessing (201) said gathered selections (31).

4. The method according to any one of the preceding claims, wherein converting (202) said selection (31) into a command (33) comprises:
• validating said selection (31) according to a current operational state of the said avionic system (1).

5. The method according to any one of the preceding claims, further comprising:
• storing (401, 402) data (36, 37) generated by said second management module (35) in said shared data base (25) in such a way as to render said data (36, 37) usable by said first management module (29).

6. The method according to Claim 5, further comprising:
• accessing (501, 502), by said first management module (29), said shared data base (25) for acquiring said data (36, 37); and
• entering said data (36, 37) into said interface device (7).

7. The method according to Claim 6, wherein entering said data (36, 37) into said interface device (7) comprises:
• displaying said data (36, 37) on said interface device (7).

8. The method according to any one of Claims 5 to 7, wherein said data (36, 37) comprise a datum (36) regarding said on-board apparatus (3).

9. The method according to any one of Claims 5 to 8, wherein said data (36, 37) comprise a datum (37) regarding flight and/or said aircraft (2), and/or an operational state of said avionic system (1).

10. The method according to any one of Claims 5 to 9, wherein said shared data base (25) comprises:
• a first module (38) for storing commands (33) and data (36) regarding said on-board apparatus (3); and
• a second module (39) for storing data (37) regarding flight and/or said aircraft (2) and/or the operational state of said avionic system (1).

11. A computer-program product loadable into the memory of a mission computer (5) of the avionic system (1) of an aircraft (2), and designed for implementing, when run on said mission computer (5), the method according to any one of the preceding claims.

12. A mission core system (4) for an avionic system (1) of an aircraft (2), comprising a mission computer (5) on which there is installed a computer-program product according to Claim 11.

13. An aircraft (2) equipped with an avionic system (1) comprising a mission core system (4) according to Claim 12.
